# EUROPÄISCHE PATENTSCHRIFT

(11) **EP 1 953 445 B1**
(45) Veröffentlichungstag und Bekanntmachung des Hinweises auf die Patenterteilung: **01.04.2009**
(21) Anmeldenummer: 08000426.0
(22) Anmeldetag: 11.01.2008
(51) Int. Cl.: F17C 13/00

(54) **Tank zur Lagerung kryogener Flüssigkeiten und lagerfähiger Treibstoffe**
Tank for storing cryogenic fluids and storable fuels
Réservoir de stockage de liquides cryogènes et carburants pouvant être stockés

(30) Priorität: 03.02.2007 DE 102007005539
(43) Veröffentlichungstag der Anmeldung: 06.08.2008
(73) Patentinhaber: Astrium GmbH, 85521 Ottobrunn (DE)
(72) Erfinder: Behruzi, Kei Philipp, Dr., 28209 Bremen (DE); Netter, Gaston, Dr., 27729 Vollersode (DE)
(74) Vertreter: Hansmann, Dierk

(56) Entgegenhaltungen:
- EP-A- 1 484 095
- DE-A1- 3 315 300
- US-A- 2 983 331
- US-A- 3 130 022
- US-A- 3 295 545
- US-A- 3 318 073
- US-A- 3 744 738

## Beschreibung

Die Erfindung betrifft einen Tank zur Lagerung kryogener Flüssigkeiten bzw. lagerfähiger Treibstoffe zum Betrieb von Raumflugkörpern, mit einem als Fördermedium dienenden Treibgas sowie mit wenigstens einer Befüll- und Entnahmevorrichtung in Form eines wiederfüllbaren Reservoirs, bei der mittels Sieben und unter Ausnutzung der Oberflächenspannung eine Separation des Treibgases von der Flüssigkeit herbeigeführt wird.

Bei Tanks dieser Art , wie sie beispielsweise aus der DE-A-33 15 300 bekannt sind, dienen Treibgase zur Förderung der darin enthaltenen flüssigen Komponenten, d.h. des Treibstoffs auf der einen und eines Oxidators auf der anderen Seite, in die Brenn- bzw. Reaktionskammer. Als Treibgase werden üblicherweise Inertgase wie Helium (He) oder Stickstoff (N₂) eingesetzt, die unter Druck in den Treibstoff- bzw. den Oxidatorbehälter gepreßt werden und die dadurch den Treibstoff und den Oxidator in das zum jeweiligen Triebwerk führende Rohrleitungssystem pressen. Wichtig ist dabei eine vollständige und sichere Trennung zwischen dem als Fördermedium dienenden Treibgas und dem in das Triebwerk gelangenden Treibstoff bzw. Oxidator, da Bei kryogenen Flüssigkeiten, insbesondere bei flüssigem Wasserstoff, führt die Erwärmung des Treibstoffs aufgrund von Verdampfungseffekten über der Zeit im allgemeinen zu einem Druckanstieg im Tank. Der entstehende Überdruck muss zur Wahrung der strukturellen Integrität des Tanks bei Erreichen eines oberen Grenzwertes aus dem Tank abgeführt werden. Diese Problematik tritt insbesondere bei kryogenen Raumfahrtsystemen auf, die über längere Zeit im Orbit im schwerelosen Zustand operieren müssen. Das im Tank befindliche Gas wird dabei häufig auch zur Lageregelung des Raumflugkörpers verwendet. Dies ist eine im vergleich zu einem zusätzlichen Antriebssystem kostengünstige und für die Lageregelung ausreichende Variante der Schuberzeugung. Das kalte Gas wird dabei aus dem Treibstofftank über eine oder mehrere Schubdüsen gerichtet in das Vakuum entlassen.

Wird bei diesem Vorgang ein Gas-Flüssigkeitsgemisch aus dem Tank in das Vakuum entlassen, so führen die unterschiedlichen Dichten von Flüssigkeit und Gas je nach Mischungsverhältnis zu einem nicht konstanten Schubprofil. Der Regelalgorithmus des Raumfahrzeuges muss dann diese Änderungen des Schubes entsprechend den Missionsanforderungen korrigieren. Das Ablassen von Flüssigkeit aus der Gasentnahmevorrichtung ist weiterhin insofern unerwünscht, als der Treibstoff dann nicht mehr für das Haupttriebwerk des Raumfahrzeugs zur Verfügung steht.

Zur sicheren Trennung der Gas- und Flüssigkeitsphasen werden bisher in der Raumfahrt folgende Verfahren angewandt:
- Durch die Erwärmung des Treibstoffs wird die aus dem Treibstofftank hervortretende Flüssigkeit verdampft. Dieses Verfahren erfordert einen hohen Energiebedarf zur Verdampfung der Flüssigkeit.
- Es wird eine zusätzliche Beschleunigung aufgebracht, die bewirkt, dass sich der Treibstoff zum Zeitpunkt der Druckentlastung nicht am Gasauslaß befindet. Dies erfordert eine gerichtete Beschleunigung mittels eines zusätzlichen Antriebssystems, was im allgemeinen relativ kostspielig ist. Zusätzlich ist eine Anpassung des Missionsprofils vor einer Druckentlastung notwendig.

Darüber hinaus ist aus der US-PS 4 027 494 die Verwendung von Phasenseparatoren zur Trennung der flüssigen von der gasförmigen Phase bekannt geworden, wobei in dieser bekannten Vorrichtung ein Phasenseparator für Phasen geringer Beschleunigung zum Einsatz kommt und die Trennung unter Verwendung supraleitender Magnete erfolgt. Weiterhin beschreibt die US-PS 4 848 987 einen Phasenseparator, bei dem Pumpen und eine Reihe von Ventilen vorgesehen sind. Schließlich wird bei einem in der US-PS 7 077 885 B2 beschriebenen Phasenseparator ein Propeller verwendet, der ein Flüssigkeits-Gasgemisch in Rotation versetzt und bei dem eine Membran aus Polyethylen oder Nylon die Flüssigkeit, in diesem Fall Wasser, trennt. Dieses bekannte System ist für einen Einsatz zusammen mit Brennstoffzellen vorgesehen und eignet sich nicht zur Trennung kryogener Flüssigkeiten. Weitere, aus den US-PSen 4 435 196 und 4 617 031 bekannt gewordene Vorrichtungen sind auf einen Einsatz im Schwerefeld der Erde beschränkt.

Der Erfindung liegt die Aufgabe zugrunde, einen Tank der eingangs genannten Art derart auszubilden, dass eine sichere Phasentrennung sowohl für kryogene als auch für nicht kryogene Treibstoffe und Flüssigkeiten bei unterschiedlichsten Beschleunigungen, von geringen Beschleunigungen während ballistischer Flugphasen bis hin zu hohen Beschleunigungen während der Hauptschubphasen, wie sie in Raumfahrtsystemen auftreten, gewährleist ist.

Die Erfindung löst diese Aufgabe, indem sie vorsieht, daß bei einem derartigen Tank die Befüll- bzw. Entnahmevorrichtung im oberen Bereich des Tanks angeordnet ist und aus einem im wesentlichen zylinderförmigen Gehäuse besteht, das mit einer Reihe umfangsseitig angeordneter, sich zum Tank hin erweiternder Öffnungen sowie mit einem zu wenigstens einem Triebwerk führenden Entnahmerohr versehen ist, wobei die Öffnungen mit hintereinander wechselseitig angeordneten, in die Öffnung ragenden Blechen versehen und über ein Doppelsieb mit dem Inneren des Gehäuses verbunden sind und wobei an der Innenwand des Gehäuses in parallel zur Längsachse des Gehäuses verlaufende Bleche angeordnet sind.

Die sich zum Tank hin erweiternden und somit in etwa trompetenförmig ausgebildeten Öffnungen sind dabei durch den Einbau von Kapillarblechen so ausgebildet, dass das Eindringen von Flüssigkeiten weitestgehend verhindert wird. Dringt, zum Beispiel aufgrund größerer Flüssigkeitsbewegungen, Flüssigkeit in das Innere der Entnahmevorrichtung ein, so wird diese mittels der Kapillarbleche in das Innere des Reservoirs abgeführt und dadurch vom Gas getrennt. Die bei den erfindungsgemäßen Tank vorgesehene Entnahmevorrichtung besitzt dabei den Vorteil, dass sie mit den Blechen nur aus passiven Komponenten besteht und beispielsweise keine Ventile aufweist. Das gesamte System bedarf daher keiner zusätzlichen Steuerung, wie dies beispielsweise bei Systemen der Fall ist, die auf eine Vorbeschleunigung angewiesen sind oder die eine Phasentrennung durch eine Verdampfung des Treibstoffs herbeiführen. Der Tank nach der Erfindung zeichnet sich daher durch einen gegenüber aktiven Systemen wesentlich vereinfachten Aufbau, eine gesteigerte Robustheit und reduzierte Kosten aus und erlaubt die flüssigkeitsfreie Förderung von Gas während Phasen reduzierter Beschleunigung, d.h. ballistischer Phasen, ebenso wie in beschleunigten Flugphasen, wie sie bei Oberstufen und Transferfahrzeugen in der Raumfahrt auftreten.

Der Tank nach der Erfindung gewährleistet auf eine einfache Weise, dass bei einer Reduzierung des Tankdrucks durch Ablassen des Druckgases sowohl im Falle der Beschleunigung als auch im schwerelosen Zustand lediglich das Treibgas bzw. der sich im Tank befindliche Dampf, ohne Restflüssigkeit, entweicht. Zusätzlich ist durch die Erfindung eine Zuführung von Treibgas möglich. Wird relativ zur Tanktemperatur ein warmes Inertgas eingebracht, so führt die kontrollierte Verdampfung der Flüssigkeit in der Entnahmevorrichtung, soweit vorhanden, zu einer zusätzlichen Masseeinsparung hinsichtlich des Bedrückungsgases.

Nachfolgend soll die Erfindung anhand eines in der Zeichnung dargestellten Ausführungsbeispiels näher erläutert werden. Es zeigen:
- Fig. 1: einen Teilschnitt durch eine Oberstufentankanordnung mit Tanks für Wasserstoff und Sauerstoff und mit darin eingebauten Entnahmevorrichtungen,
- Fig. 2: zwei Darstellungen der Lage der Flüssigkeit in einem Tank gemäß Fig. 1 während Phasen hoher Beschleunigung,
- Fig. 3: verschiedene Darstellungen der Lage der Flüssigkeit in einem Tank gemäß Fig. 1 während Phasen geringer Beschleunigung,
- Fig. 4: verschiedene Schnittdarstellungen einer Entnahmevorrichtung der Anordnung gemäß Fig. 1,
- Fig. 5: eine Explosionsdarstellung eines Details der Anordnung gemäß Fig. 4,
- Fig. 6: eine Darstellung des Vorgangs einer mehrstufigen Flüssigkeitsabscheidung bei der in Fig. 4 dargestellten Anordnung und
- Fig. 7: eine Darstellung des Flüssigkeitsaustreibens während beschleunigter Phasen bei der in Fig. 4 dargestellten Anordnung.

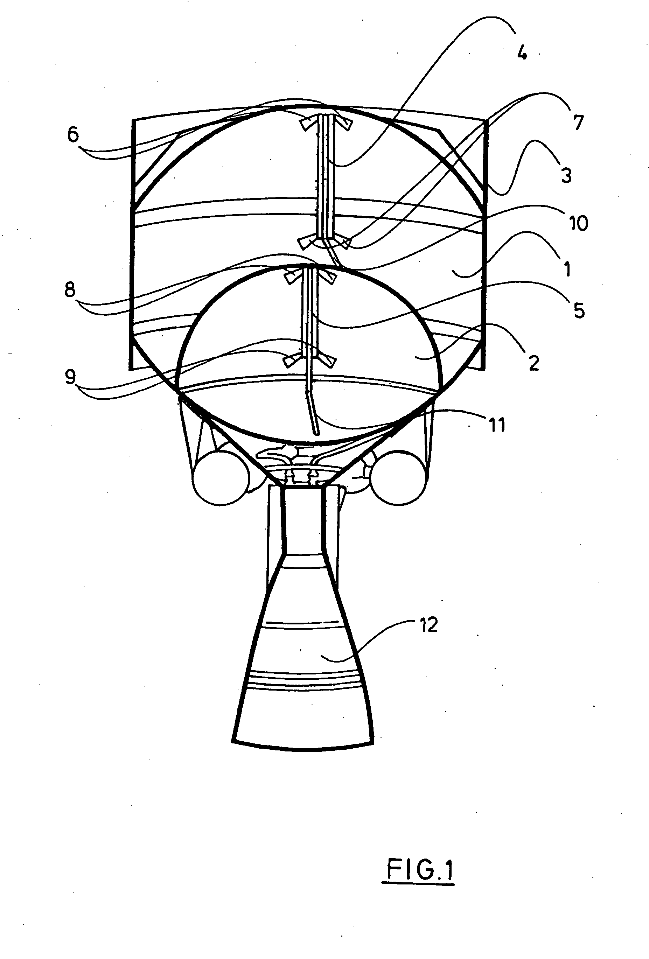

Bei den in Fig. 1 dargestellten Tanks 1 und 2 handelt es sich um Tanks, wie sie üblicherweise in einer Raketenoberstufe 3 mit einem Haupttriebwerk 12 angeordnet sind. In jedem der beiden Tanks 1, 2 befindet sich jeweils eine Gaszuführ- und Entnahmevorrichtung 4 bzw. 5. Die Vorrichtungen 4 und 5 sind dabei gleichartig aufgebaut und unterscheiden sich lediglich durch ihre Baulänge, die von der jeweiligen Tankgeometrie abhängt. Sich nach außen erweiternde, trompetenförmige Öffnungen 6, 7, 8, und 9 stellen jeweils die Verbindung zwischen dem Tank 1 bzw. 2 und den Gaszuführ- und Entnahmevorrichtungen 4 und 5 dar. Leitungen 10 bzw. 11 verbinden die Gaszuführ- und Entnahmevorrichtungen 4 und 5 mit dem Leitungssystem außerhalb der Tanks, das zu einem Triebwerk 12 führt und das aus Gründen der Übersichtlichkeit der Darstellung in den Figuren nicht gezeigt ist. Die Leitungen 10 bzw. 11 können dabei, je nach Bauart, an einer beliebigen Stelle aus den Tanks 1 und 2 austreten. Die trompetenförmigen Öffnungen 6, 7, 8, 9 sind im Tank 1 und 2 jeweils so angeordnet, dass sich jeweils vier Öffnungen 6, 8 ganz oben im Treibstofftank befinden und vier weitere Öffnungen 7 und 9 etwa in der Mitte des Tanks 1, 2.

Die Lage der trompetenförmigen Öffnungen 6, 7, 8, und 9 im jeweiligen Tank 1 und 2 ist dabei insofern optimiert, als während der verschiedenen Missionsphasen weitestgehend wenigstens eine der Öffnungen nicht vollständig von Flüssigkeit umgeben ist, wobei das System aber auch eine kurzzeitige Bedeckung aller Öffnungen toleriert. Während dieser Phasen füllt sich das Innere des Systems mit Flüssigkeit, während die von dieser verdrängte Gasmenge ausgetrieben wird.

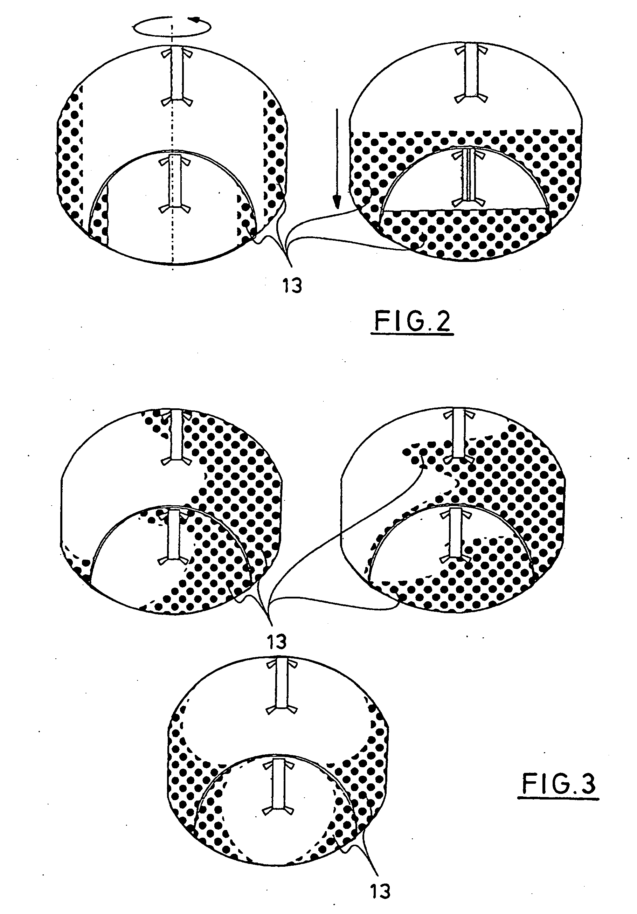

Die Orte im Tank 1 und 2, an denen sich die Flüssigkeit 13 während der unterschiedlichen Missionsphasen befinden kann, sind in den Figuren 2 und 3 dargestellt. Die Missionsphasen unterscheiden sich wie folgt:
- Phasen mit hoher Beschleunigung (Fig. 2): Diese Phasen beinhalten Missionsphasen, während der das Haupttriebwerk 12 gezündet hat und eine lineare Beschleunigung erzeugt. Die Flüssigkeit befindet sich dann, wie im rechten Teil der Figur dargestellt, im unteren Bereich des Tanks. Wird der Tank in Rotation versetzt, so lagert sich die Flüssigkeit im äußeren Bereich des Tanks an und hat so keine Verbindung zur Gaszuführ- und Entnahmevorrichtung 4, 5. Diese Situation ist im linken Teil der Figur dargestellt.
- Anfänglich, d.h. zu Beginn einer Mission, wenn sich die Rakete am Boden befindet, ist der Tank 1, 2 und sind somit auch die Gaszuführ- und Entnahmevorrichtungen 4 und 5 weitestgehend mit Flüssigkeit gefüllt. Während der ersten Zündung des Haupttriebwerks 12 leert sich das Reservoir. In dieser Phase der Treibstoffentnahme wird in den Tanks 1 und 2 über die jeweilige Gaszuführ- und Entnahmevorrichtung 4, 5 Gas in die Tanks 1 und 2 eingebracht, das die entnommene Flüssigkeit ersetzt. Das Reservoir ist so dimensioniert, dass, sobald die erste Zündung beendet ist, die unteren Öffnungen 9 und 10 der Gaszuführ- und Entnahmevorrichtungen 4 bzw. 5 keine Verbindung mehr mit der im jeweiligen Tank noch verbleibenden Flüssigkeit haben, so daß das System dann weitestgehend frei von Flüssigkeit ist.
- Ballistische Flugphasen mit geringer Beschleunigung, zum Beispiel während des Aussetzen eines Satelliten (Fig. 3): Die Flüssigkeit befindet sich hier in einer chaotische Bewegung im Tank 1 bzw. 2. und sie kann sporadisch die Öffnungen 9 und 10 der Gaszuführ- und Entnahmevorrichtungen 4 bzw. 5 erreichen.

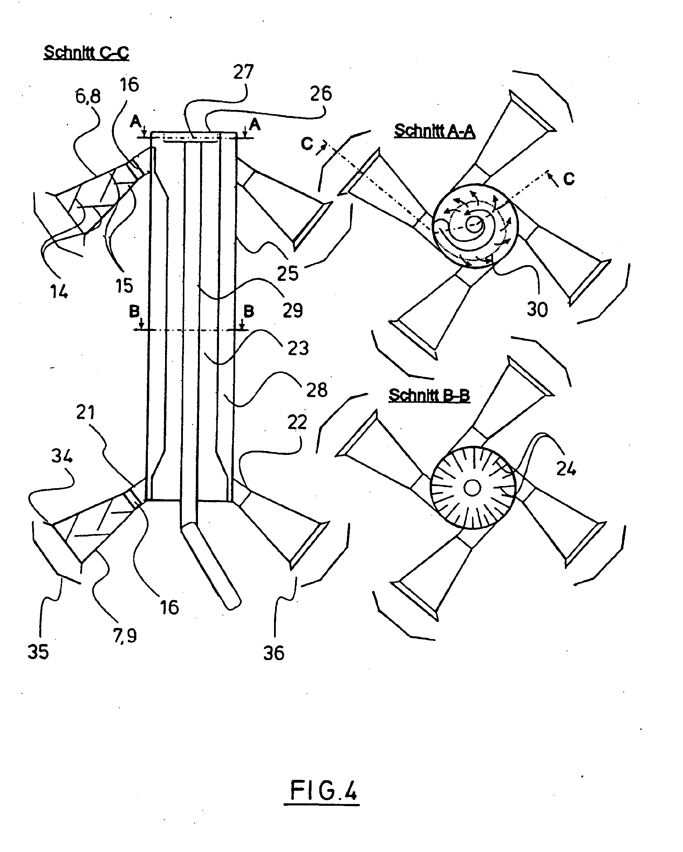

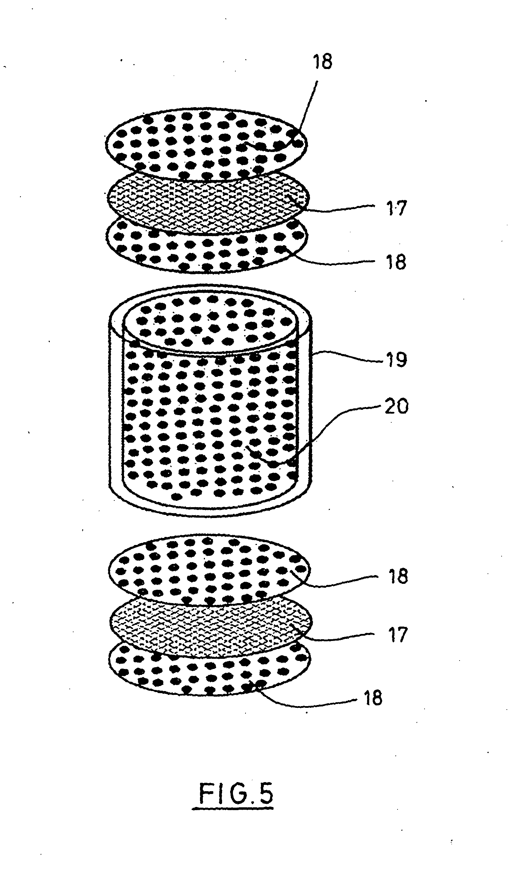

Gemäß den in Fig. 4 gezeigten verschiedenen Schnittdarstellungen einer der beiden Gaszuführ- und Entnahmevorrichtungen 4, 5 befindet sich innerhalb der sich nach außen erweiternden Öffnungen 6, 7, 8 und 9 eine Reihe von Blechen 14. Die Bleche 14 können auch in Form einer Siebplatte oder Lochplatte ausgeführt sein. Die Bleche 14 sind hintereinander so angeordnet, dass sie mit den Wänden der Öffnungen 6, 7, 8 und 9 jeweils einen spitzen Winkel bilden. Eine Prallplatte 35, die vor den trompetenförmigen Öffnungen 6, 7, 8 und 9 angeordnet ist, sorgt dafür, daß ein Großteil der Flüssigkeit an den trompetenförmigen Öffnungen 6, 7, 8 und 9 vorbeiströmt. Die Prallplatte 35 ist dabei so angeordnet, daß sich der durch die Prallplatte 35 und die konische abgewinkelte Erweiterung 34 gebildete Spalt 36 nach außen immer schmaler wird. Dies hat zur Folge, daß Flüssigkeit, die in den Spalt eindringt, kapillar getrieben in dem abgewinkelten Bereich der Prallplatte 35 weitestgehend bleibt und nicht weiter in die trompetenförmigen Öffnungen 6, 7, 8 und 9 eindringt. Trotzdem eindringende Flüssigkeit lagert sich dann kapillar getrieben verstärkt in den Ecken 15 an, die die Bleche 14 mit den Wänden der Öffnungen 6, 7, 8 und 9 bilden. Die Bleche 24 sind dabei nur sehr schmal ausgeführt, damit sich hier nur vergleichsweise wenig Flüssigkeit anlagern kann. Der Hals jeder der trompetenförmigen Öffnungen 6, 7, 8 und 9 wird, wie in Fig. 5 dargestellt, jeweils von einer Doppelsiebhülse 16 gebildet. Wie weiterhin aus den Schnittdarstellungen A-A und B-B hervorgeht, sind die trompetenförmigen Öffnungen 6, 7, 8 und 9 in etwa tangential am Gehäuse der jeweiligen Gaszuführ- und Entnahmevorrichtung 4, 5 angeordnet.

wie die Explosionsdarstellung des Aufbaus einer solchen Doppelsiebhülse 16 in Fig. 5 zeigt, werden zwei Siebe 17 jeweils von zwei Lochplatten 18 begrenzt und es sind zwischen den Kombinationen aus Sieben 17 und Lochplatten 18 weiterhin zwei zylindrische Hülsen 19 und 20 konzentrisch ineinanderliegend angeordnet, von denen die innere Hülse 20 mit Löchern versehen ist. Dringt nun Feuchtigkeit in den Halsbereich einer der Öffnungen 6, 7, 8 und 9 ein, so führt die Benetzung der Bereiche zwischen den Sieben 17 und den Lochplatten 18 bzw. zwischen der Hülse 19 und der Lochhülse 20 zu einer vollständigen Benetzung der Festkörperstrukturen und zum Einschluß einer Gasblase im Innenbereich der Doppelsiebhülse 16. Das Eindringen von Flüssigkeit wird durch den sogenannten Bubblepoint-Druck der beiden Siebe 17 reduziert. Dieser Bubblepoint-Druck ist derjenige Druck, den eine Strömung aufbringen muss, um die Gasblase aus dem Innenbereich der Doppelsiebhülse 16 zu entfernen. Das Eindringen größerer Mengen von Flüssigkeit wird dadurch wirksam minimiert. Der notwendige Bubblepoint-Druck hängt dabei von der Strömungsgeschwindigkeit des Flüssigkeits-Gasgemisches ab.

Hinter der Doppelsiebhülse 16 befindet sich, wie weiterhin der Darstellung gemäß Fig. 4 entnehmbar ist, eine Benetzungssperre 21, die entweder aus einer Schweißkante oder, alternativ dazu, aus einer vertikal zur Rohrwand 22 der jeweiligen Öffnungen 6, 7, 8, 9 angeordneten Ringscheibe bestehen kann.

Die trompetenförnnigen Öffnungen 6, 7, 8 und 9 münden etwa tangential in einen im Fall des hier dargestellten Ausführungsbeispiels zylinderförmig ausgeführten Innenbereich 23 der jeweiligen Gaszuführ- und Entnahmevorrichtung 4, 5, in dem eine etwaig eindringende Restmenge an Flüssigkeit aufgefangen wird. Die tangentiale Anordnung der trompetenförmigen Öffnungen 6, 7, 8 und 9 erzeugt eine Rotation des eindringenden Flüssigkeits-Gasgemisches, welches die Separation der Phasen verbessert. Alternativ dazu kann zur vergrößerung des Volumens der Innenbereich 23 auch andere geometrische Formen bzw. einen variablen Durchmesser aufweisen, beispielsweise kann ein sphärischer Innenbereich gewählt werden oder auch eine quadratische Rundform anstelle einer Zylinderform.

Der Innenbereich 23 ist mit einer Reihe von Kapillarblechen 24 versehen, die die durch die Öffnungen 6, 7, 8 und 9 eindringende Restmenge an Flüssigkeit in den Reservoirbereich, d.h., den Innenbereich 23, abführen. Die Kapillarbleche 24 sind an der Innenwand einer Hülse 25 angebracht, die zugleich das Gehäuse der jeweiligen Gaszuführ- und Entnahmevorrichtung 4, 5 bildet, und sind in der Nähe der Öffnungen 6, 7, 8 und 9 vergleichsweise schmal ausgebildet, damit sich dort keine größeren Flüssigkeitsmengen ansammeln können. Zur Optimierung des kapillaren Füllverhaltens sind die Kapillarbleche 24 abwechselnd schmaler und breiter ausgebildet, wie in der Schnittdarstellung C-C in Fig. 4 erkennbar ist.

Das Zentrum der Hülse 25 ist frei von Kapillarblechen 24, so dass sich in diesem Bereich bevorzugt Gas ansammelt. An dem dem Triebwerk 12 abgewandten, in der Zeichnung oberen Ende 26 jeder Be- und Entnahmevorrichtung 4, 5 befindet sich ferner eine Separationskammer 27, deren innerer Aufbau insbesondere aus der Schnittdarstellung A-A in Fig. 4 hervorgeht. In dieser Separationskammer 27 ist ein Siebelement 30 schneckenförmig angebracht, wobei die Krümmung des Siebelementes 30 bewirkt, dass sich die im Gas befindliche Restflüssigkeit an dem Sieb anlagert. Eines der sternförmig angeordneten Kapillarbleche 24, das Kapillarblech 28, ist in Längsrichtung des Gehäuses 25 so weit in Richtung auf die Separationskammer 27 verlängert, dass es bis an das äußere Ende des Siebelementes 30 heranreicht und dadurch die Restflüssigkeit, die aus der Separationskammer 27 ausgetrieben wird, wieder dem Reservoirbereich 23 zurückführt.

Die Separation der Phasen erfolgt somit weitestgehend kapillargetrieben. Ein jeweils im zentralen Bereich der Gaszuführ- und Entnahmevorrichtung 4, 5 angeordnetes Entnahmerohr 29 führt das separierte Gas aus der Gaszuführ- und Entnahmevorrichtung 4, 5 und damit aus dem jeweiligen Treibstofftank 1, 2 ab. Das Entnahmerohr 29 kann entweder, wie in Fig. 5 dargestellt, durch den gesamten Innenbereich 23 der Gaszuführ- und Entnahmevorrichtung 4, 5 führen oder aber, je nach Tankausführung, auch in Gegenrichtung nach oben aus der Gaszuführ- und Entnahmevorrichtung 4, 5 austreten. In jedem Fall kann nach Bedarf jedes Entnahmerohr 29 über die jeweils zugeordnete Leitung 10 bzw. 11 mit dem Verbraucher verbunden werden.

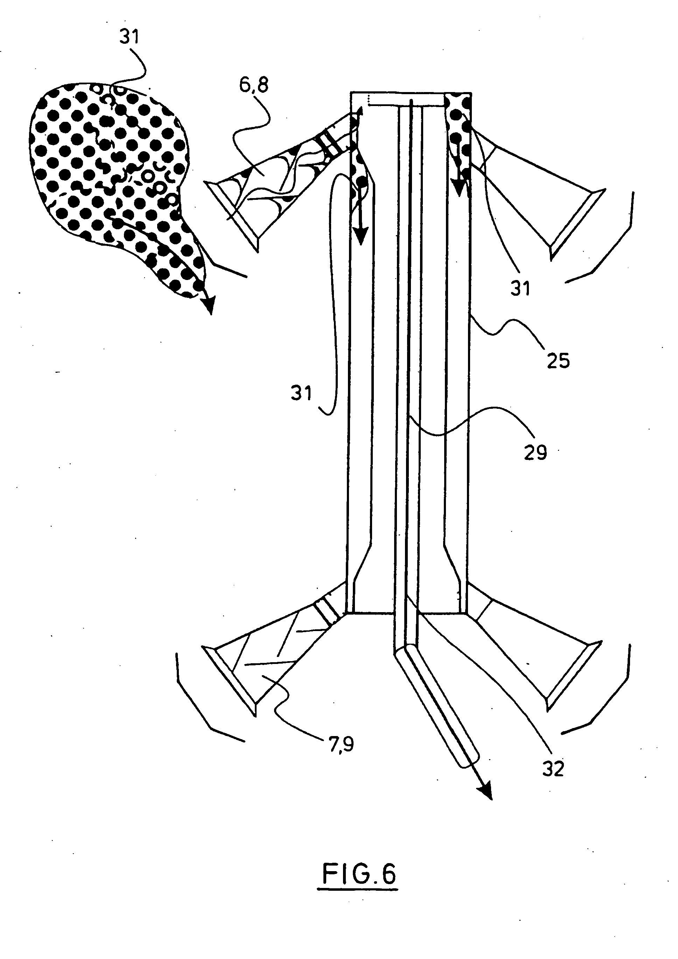

In Fig. 6 ist für eine der Öffnungen 6 bis 9 der in Fig. 4 gezeigten Anordnung die Strömung für den Fall einer Beaufschlagung der Öffnung mit der im jeweiligen Tank 1, 2 enthaltenen Flüssigkeit 31 und das Abscheiden dieser Flüssigkeit 31 aus dem Gas schematisch dargestellt, wobei der Weg von Flüssigkeit 31 und Gas 32 im Inneren der Gaszuführ- und Entnahmevorrichtung 4, 5 jeweils durch Pfeile angedeutet ist. Die Anordnung ermöglicht so lange eine sichere Phasentrennung, bis der Bereich der Kapillarbleche 24 des Reservoirbereiches 23 vollständig mit Flüssigkeit gefüllt ist. Die Größe des Reservoirs 23 ist daher so dimensioniert, dass sie für eine ballistische Phase ausreichend ist.

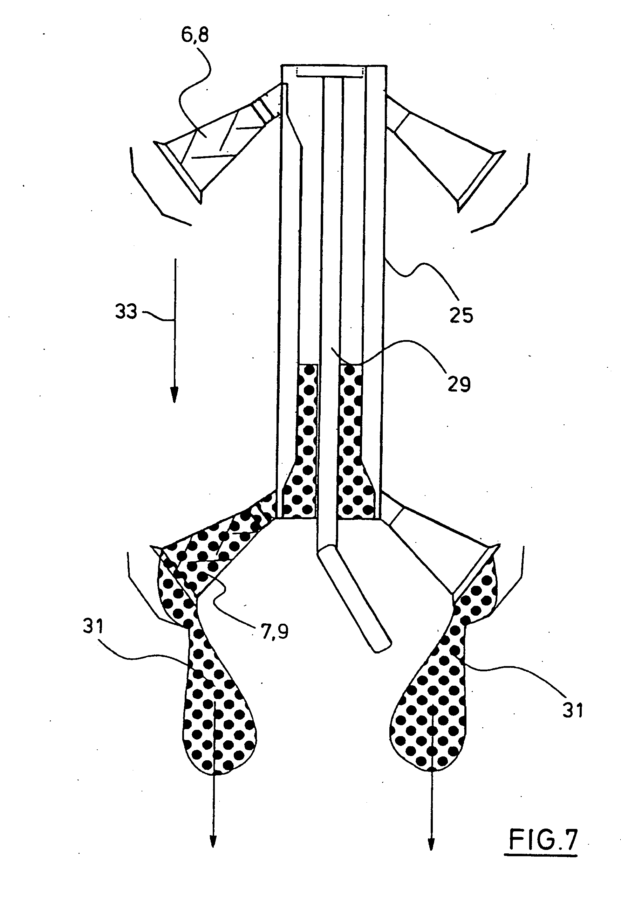

Eine Entleerung des Reservoirs 23 ist, wie abschließend in Fig. 7 schematisch dargestellt, über die unteren, in Richtung des Triebwerks 12 gelegenen Öffnungen 7 und 9 möglich, indem eine in dieser Richtung auf die Flüssigkeit 31 wirkende Beschleunigung, in der Figur durch den Pfeil 33 angedeutet, erzeugt wird. Die Öffnungen 6, 7, 8 und 9 und die Bleche 14 sind dabei so ausgebildet, dass sie schräg nach unten weisen. Dadurch ist gewährleistet, dass sich das Reservoir während einer solchen Beschleunigungsphase vollständig entleert.

Die beschriebene Anordnung ermöglicht sowohl die gasfreie Abführung des Druckgases im Tank als auch die Zuführung von Inertgasen wie Helium und Stickstoff bzw. rückgeführten Dampfes zur Bedrückung des Tanks. Wird relativ zur Tanktemperatur ein warmes Inertgas eingebracht, so führt die kontrollierte Verdampfung der Flüssigkeit in der Vorrichtung zu einer zusätzlichen Masseeinsparung ohne dass die Flüssigkeit im Tank durch die Verdampfung beeinflußt wird, wie sie, zumindest in der Nähe des Treibstoffauslasses unerwünscht ist.

## Patentansprüche

1. Tank zur Lagerung kryogener Flüssigkeiten bzw. lagerfähiger Treibstoffe zum Betrieb von Raumflugkörpern, mit einem als Fördermedium dienenden Treibgas sowie mit wenigstens einer Gaszuführ- und Entnahmevorrichtung in Form eines wiederfüllbaren Reservoirs, bei der mittels Sieben und unter Ausnutzung der Oberflächenspannung eine Separation des Treibgases von der Flüssigkeit herbeigeführt wird, **dadurch gekennzeichnet, dass** die Gaszuführ- und Entnahmevorrichtung (4, 5) im oberen Bereich des Tanks (1, 2) angeordnet ist und aus einem im wesentlichen zylinderförmigen Gehäuse (25) besteht, das mit einer Reihe umfangsseitig angeordneter, sich zum Tank (1, 2) hin erweiternder Öffnungen (6, 7, 8; 9), abgedeckt durch Prallplatten (35), sowie mit einem zu wenigstens einem Auslaß führenden Entnahmerohr (29) versehen ist, wobei die Öffnungen (6, 7, 8, 9) mit hintereinander wechselseitig angeordneten, in die Öffnung (6, 7, 8, 9) ragenden Blechen (14) versehen und über ein Doppelsieb (16) mit dem Inneren des Gehäuses (25) verbunden sind und wobei an der Innenwand des Gehäuses (25) in parallel zur Längsachse des Gehäuses (25) verlaufende Bleche (24) angeordnet sind.

2. Tank nach Anspruch 1, **dadurch gekennzeichnet, dass** in einem Endbereich des Gehäuses (25) eine Separationskammer (27) angeordnet ist

3. Tank nach Anspruch 2, **dadurch gekennzeichnet, dass** im Inneren der Separationskammer (27) ein schneckenförmig ausgebildetes Sieb (30) angeordnet ist und dass wenigstens eines der Bleche (24) mit der Separationskammer (27) in Verbindung steht.

4. Tank nach einem der Ansprüche 1 bis 3, **dadurch gekennzeichnet, dass** die trompetenförtnigen Öffnungen (6, 7, 8, 9) in etwa tangential am Gehäuse (25) angeordnet sind.

5. Tank nach einem der Ansprüche 1 bis 4, **dadurch gekennzeichnet, dass** Gehäuse (25) lokal einen größeren Durchmesser aufweist.

6. Tank nach einem der Ansprüche 1 bis 5, **dadurch gekennzeichnet, dass** er zur Aufnahme kryogener Flüssigkeiten, wie flüssigem Wasserstoff und flüssigem Sauerstoff, ausgebildet ist.

7. Tank nach einem der Ansprüche 1 bis 5, **dadurch gekennzeichnet, dass** er zur Aufnahme lagerfähiger Treibstoffe, wie Monomethylhydrazin (MMH) und Hydrazin (N₂H₄₎, ausgebildet ist.

8. Tank nach einem der Ansprüche 1 bis 5, **dadurch gekennzeichnet, dass** er zur Aufnahme eines Oxidators wie Distickstofftetroxid (N₂O₄), ausgebildet ist.

## Claims

1. Tank for storing cryogenic liquids and storable propellants for operating spacecraft, with a propellant gas serving as conveying medium and also with at least one gas supply and tapping device in the form of a refillable reservoir, in which the propellant gas is separated from the liquid by means of screens and utilising the surface tension, **characterised in that** the gas supply and tapping device (4, 5) is arranged in the upper region of the tank (1, 2) and consists of a substantially cylindrically shaped housing (25) that is provided with a series of circumferentially arranged openings (6, 7, 8, 9) broadening out in the direction of the tank (1, 2), covered by baffle plates (35), and is also provided with a tapping tube (29) leading to at least one outlet, wherein the openings (6, 7, 8, 9) are provided with metal sheets (14) arranged in an alternating manner behind one another and projecting into the openings (6, 7, 8, 9) and are connected via a double screen (16) to the interior of the housing (25), and wherein metal sheets (24) are arranged on the inner wall of the said housing (25) and running in parallel to the longitudinal axis of said housing (25).

2. Tank according to claim 1, **characterised in that** a separation chamber (27) is arranged in an end region of the housing (25).

3. Tank according to claim 2, **characterised in that** a screw-shaped screen (30) is arranged in the interior of the separation chamber (27) and that at least one of the metal sheets (24) is in communication with the separation chamber (27).

4. Tank according to one of claims 1 to 3, **characterised in that** the trumpet-shaped openings (6, 7, 8, 9) are arranged approximately tangentially on the housing (25) .

5. Tank according to one of claims 1 to 4, **characterised in that** the housing (25) has in localised regions a larger diameter.

6. Tank according to one of claims 1 to 5, **characterised in that** it is designed to hold cryogenic liquids such as liquid hydrogen and liquid oxygen.

7. Tank according to one of claims 1 to 5, **characterised in that** it is designed to hold storable propellants such as monomethylhydrazine (MMH) and hydrazine (N₂H₄).

8. Tank according to one of claims 1 to 5, **characterised in that** it is designed to hold an oxidising agent such as dinitrogen tetroxide (N₂O₄).

## Revendications

1. Réservoir pour le stockage de liquides cryogéniques, respectivement de combustibles pouvant être stockés pour le fonctionnement de véhicules spatiaux avec un gaz combustible, qui sert d'agent propulseur, ainsi qu'avec au moins un dispositif d'alimentation en gaz et de prélèvement de gaz sous la forme d'un réservoir qui peut être rempli de nouveau, dans lequel, au moyen d'un tamis et en exploitant la tension superficielle, le gaz propulseur est séparé du liquide, **caractérisé en ce que** le dispositif d'alimentation et de prélèvement de gaz (4, 5) est disposé dans la zone supérieure du réservoir (1, 2), et consiste essentiellement en un carter (25) en forme de cylindre, qui est pourvu d'une série d'ouvertures (6, 7, 8, 9) disposées sur le côté périphérique, en s'élargissant vers le réservoir (1, 2), et couvertes par des plaques de déflexion (35), ainsi qu'avec un tube de prélèvement (29) qui conduit à au moins une sortie, les ouvertures (6, 7, 8, 9) étant pourvues de tôles (14) orientées alternativement d'un côté à l'autre, les unes derrière les autres, en faisant saillie dans les ouvertures (6, 7, 8, 9), et étant reliées, par l'intermédiaire d'un double tamis (16), à l'intérieur du carter (25), et des tôles (24), qui s'étendent parallèlement à l'axe longitudinal du carter (25), étant disposées sur la paroi intérieure du carter (25).

2. Réservoir selon la revendication 1, **caractérisé en ce que**, dans une zone d'extrémité du carter (25), est disposée une chambre de séparation (27).

3. Réservoir selon la revendication 2, **caractérisé en ce que**, à l'intérieur de la chambre de séparation (27), est disposé un tamis (30), réalisé en forme de vis sans fin, et que l'une des tôle (24) au moins est reliée à la chambre de séparation (27).

4. Réservoir selon l'une des revendications 1 à 3, **caractérisé en ce que** les ouvertures (6, 7, 8, 9), en forme de trompettes, sont disposées à peu près tangentiellement sur le carter (25).

5. Réservoir selon l'une des revendications 1 à 4, **caractérisé en ce que** le carter (25) présente localement un plus grand diamètre.

6. Réservoir selon l'une des revendications 1 à 5, **caractérisé en ce qu'**il est conçu pour la réception de liquides cryogéniques, tels qu'hydrogène liquéfié et oxygène liquéfié.

7. Réservoir selon l'une des revendications 1 à 5, **caractérisé en ce qu'**il est conçu pour la réception de combustibles aptes au stockage, comme du monométhylhydrazine (MMH) et de l'hydrazine (N₂H₄).

8. Réservoir selon l'une des revendications 1 à 5, **caractérisé en ce qu'**il est conçu pour la réception d'un oxydant, tel que du tétroxyde d'azote (N₂O₄).
